# EUROPEAN PATENT APPLICATION

(11) **EP 4 815 586 A1**
(43) Date of publication of application: **30.09.2026**
(21) Application number: 24899503.7
(22) Date of filing: 24.10.2024
(51) Int. Cl.: H04W 64/00

(54) **COMMUNICATION METHOD AND COMMUNICATION APPARATUS**

(30) Priority: 04.12.2023 CN 202311647995
(71) Applicant: Huawei Technologies Co., Ltd., Shenzhen, Guangdong 518129 (CN)
(72) Inventor: WANG, Han, Shenzhen, Guangdong 518129 (CN); HUANG, Su, Shenzhen, Guangdong 518129 (CN)
(74) Representative: Maiwald GmbH
(86) International application number: PCT/CN2024/127105
(87) International publication number: WO 2025/118860

(57) **Abstract**

Embodiments of this application provide a communication method and a communication apparatus, to implement high-precision positioning. The method includes: receiving, by a positioning management device, first phase differential information, wherein the first phase differential information includes information obtained by performing a differential calculation on first phase information and second phase information by a first device, the first phase information is obtained by the first device by measuring first reference signals sent by a terminal device at different moments, and the second phase information is obtained by a second device by measuring second reference signals sent by the terminal device at different moments; and determining, by the positioning management device, a location of the terminal device based on the first phase differential information.

## Description

### CROSS-REFERENCE TO RELATED APPLICATIONS

This application claims priority to Chinese Patent Application No. 202311647995.6, filed with the China National Intellectual Property Administration on December 4, 2023, and entitled "Communication Method and Communication Apparatus," which is incorporated herein by reference in its entirety.

### TECHNICAL FIELD

This application relates to the communication field, and more specifically, to communication methods and communication apparatuses.

### BACKGROUND

The 3rd Generation Partnership Project (3GPP) discussed carrier phase positioning technology in the Release 18 (R18) standard version. Carrier phase positioning is one of the primary methods for high-precision positioning currently, which measures the distance with integer cycle ambiguity by detecting the carrier phase changes of reference signals from the transmitter to the receiver.

Currently, high-precision positioning methods based on the accumulated delta range (ADR) of carrier phase utilize the continuously tracked carrier phase over time to achieve high-precision positioning. The main process involves a base station measuring the phase of the reference signal sent by a terminal device at time 1 and the phase at time 2 to obtain the ADR. However, due to the clock drift deviation and/or random initial phase deviation of the terminal device, the ADR becomes biased, which in turn leads to an error in the calculation of the terminal device's position, thereby preventing the achievement of high-precision positioning for the terminal device.

### SUMMARY

Embodiments of this application provide a communication method and a communications apparatus, to implement high-precision positioning.

To achieve the foregoing objectives, the following technical solutions are used in this application:
According to a first aspect, a communication method is provided. The method may be performed by a positioning management device, or may be performed by a component of the positioning management device, for example, a processor, a chip, or a chip system of the positioning management device, or may be implemented by a logical module or software that can implement all or some functions of the positioning management device. The method may be performed by using an example in which the positioning management device performs the method. The method includes: receiving, by the positioning management device, first phase differential information, where the first phase differential information includes information obtained by performing a differential calculation on first phase information and second phase information by a first device, the first phase information is obtained by the first device by measuring first reference signals sent by a terminal device at different moments, and the second phase information is obtained by a second device by measuring second reference signals sent by the terminal device at different moments; and determining, by the positioning management device, a location of the terminal device based on the first phase differential information.

According to the communication method provided in this embodiment of this application, the first device sends the first phase differential information to the positioning management device, so that the positioning management device may determine the location of the terminal device based on the first phase differential information. Because the first phase differential information sent by the first device to the positioning management device is information obtained after the first device performs differential calculation to eliminate an impact of a random initial phase and/or a clock drift, a location of the terminal device determined by the positioning management device can be more accurate, thereby improving positioning accuracy.

In this embodiment of this application, the first phase differential information further includes an identifier of the second device. In this solution, the first device adds the identifier of the second device to the first phase differential information, so that the positioning management device can learn that the first phase differential information is obtained by the first device through differential calculation on an own first phase information and second phase information from the second device.

In this embodiment of this application, the first phase information includes one or more of the following: a first reference signal carrier phase RSCP, a first reference signal carrier phase difference RSCPD, an accumulated distance/phase change ADR, first moment information, and second moment information, where the first moment information and the second moment information are respectively used to indicate different moments at which the terminal device sends the first reference signal, or different moments at which the first device measures the first reference signal. This solution enables the first device to obtain one or more pieces of information by measuring the first reference signals sent by the terminal device at different moments.

In the embodiments of this application, the second phase information includes one or more of the following: a second reference signal carrier phase RSCP, a second reference signal carrier phase difference RSCPD, a second accumulated distance/phase change ADR, first moment information, and second moment information, where the first moment information and the second moment information are respectively used to indicate different moments at which the terminal device sends the second reference signal, or different moments at which the second device measures the second reference signal. This solution enables the second device to obtain one or more pieces of information by measuring the second reference signals sent by the terminal device at different moments.

According to a second aspect, a communication method is provided. The method may be performed by a first device, or may be performed by a component of the first device, for example, a processor, a chip, or a chip system of the first device, or may be implemented by a logical module or software that can implement all or some functions of the first device. An example in which the method may be performed by the first device is used. The method includes: receiving, by the first device, second phase information from a second device, where the second phase information is obtained by the second device by measuring second reference signals sent by the terminal device at different moments; and sending, by the first device, first phase differential information to a positioning management device, where the first phase differential information includes information obtained by the first device by performing a differential calculation on the first phase information and the second phase information, and the first phase information is obtained by the first device by measuring first reference signals sent by the terminal device at different moments.

According to the communication method provided in this embodiment of this application, the first device sends the first phase differential information to the positioning management device, so that the positioning management device may determine the location of the terminal device based on the first phase differential information. Because the first phase differential information sent by the first device to the positioning management device is information obtained after the first device performs differential calculation to eliminate the impact of a random initial phase and/or a clock drift, the positioning management device may determine a more accurate location of the terminal device, thereby improving positioning accuracy.

In this embodiment of this application, the first phase differential information further includes an identifier of the second device. In this solution, the first device adds the identifier of the second device to the first phase differential information, so that the positioning management device can learn that the first phase differential information is obtained by the first device through performing a differential calculation on the first phase information of the first device and the second phase information from the second device.

In this embodiment of this application, the first phase information includes one or more of the following: a first reference signal carrier phase RSCP, a first reference signal carrier phase difference RSCPD, an accumulated distance/phase change ADR, first moment information, and second moment information, where the first moment information and the second moment information are respectively used to indicate different moments at which the terminal device sends the first reference signal, or different moments at which the first device measures the first reference signal. This solution enables the positioning management device to determine one or more pieces of information obtained by the first device when measuring the first reference signal sent by the terminal device at different moments.

In the embodiments of this application, the second phase information includes one or more of the following: a second reference signal carrier phase RSCP, a second reference signal carrier phase difference RSCPD, a second accumulated distance/phase change ADR, first moment information, and second moment information, where the first moment information and the second moment information are respectively used to indicate different moments at which the terminal device sends the second reference signal, or different moments at which the second device measures the second reference signal. This solution enables the positioning management device to determine one or more pieces of information obtained by the second device when measuring the second reference signal sent by the terminal device at different moments.

According to a third aspect, a communication method is provided. The method may be performed by a positioning management device, or may be performed by a component of the positioning management device, for example, a processor, a chip, or a chip system of the positioning management device, or may be implemented by a logical module or software that can implement all or some functions of the positioning management device. The method may be performed by the positioning management device as an example. The method includes: receiving, by the positioning management device, first phase information and second phase information, where the first phase information is obtained by measuring, by a first device, a first reference signal sent by a terminal device at different moments, and the second phase information is obtained by measuring, by a second device, a second reference signal sent by the terminal device at different moments; and performing, by the positioning management device, differential calculation on the first phase information and the second phase information to obtain first phase differential information; and determining, by the positioning management device, a location of the terminal device based on the first phase differential information.

The communication method provided in this embodiment of this application allows the positioning management device to receive the first phase information from the first device and receive the second phase information from the second device, so that the positioning management device may perform differential calculation based on the first phase information and the second phase information to obtain the first phase differential information, and determine the location of the terminal device based on the first phase differential information. Because the first phase differential information is information obtained through differential calculation performed by the positioning management device, thereby eliminating the impact of a random initial phase and/or a clock drift, the positioning management device can determine a more accurate location of the terminal device, thereby improving positioning accuracy.

In this embodiment of this application, the first phase information includes one or more of the following: a first reference signal carrier phase RSCP, a first reference signal carrier phase difference RSCPD, a first accumulated distance/phase change ADR, first moment information, and second moment information, where the first moment information and the second moment information are respectively used to indicate different moments at which the terminal device sends the first reference signal, or different moments at which the first device measures the first reference signal. This solution enables the first device to obtain one or more pieces of information by measuring the first reference signals sent by the terminal device at different moments.

In the embodiments of this application, the second phase information includes one or more of the following: a second reference signal carrier phase RSCP, a second reference signal carrier phase difference RSCPD, a second accumulated distance/phase change ADR, first moment information, and second moment information, where the first moment information and the second moment information are respectively used to indicate different moments at which the terminal device sends the second reference signal, or different moments at which the second device measures the second reference signal. This solution enables the first device to obtain one or more pieces of information obtained by the second device when measuring the second reference signal sent by the terminal device at different moments.

According to a fourth aspect, a communication method is provided. The method may be performed by a second device, or may be performed by a component of the second device, for example, a processor, a chip, or a chip system of the second device, or may be implemented by a logical module or software that can implement all or some functions of the second device. An example in which the method may be performed by the second device is used. The method includes: determining, by the second device, second phase information, where the second phase information is obtained by the second device when measuring the second reference signal sent by the terminal device at different moments; and sending, by the second device, the second phase information to the first device.

According to the communication method provided in this embodiment of this application, the second device measures the second reference signal sent by the terminal device at different moments to obtain the second phase information, and sends the second phase information to the first device, so that the first device can obtain the second phase information.

In this embodiment of this application, the second phase information includes one or more of the following: a second reference signal carrier phase RSCP, a second reference signal carrier phase difference RSCPD, a second accumulated distance/phase change ADR, first moment information, and second moment information, where the first moment information and the second moment information are respectively used to indicate different moments at which the terminal device sends the second reference signal, or different moments at which the second device measures the second reference signal. This solution enables the second device to obtain one or more pieces of information by measuring the second reference signal sent by the terminal device at different moments.

According to a fifth aspect, a communications apparatus is provided, configured to implement the foregoing methods. The communications apparatus may be the positioning management device in the first aspect or the third aspect, or an apparatus, for example, a chip, included in the positioning management device; or the communications apparatus may be the first device in the second aspect, or an apparatus, for example, a chip, included in the first device; or the communications apparatus may be the second device in the fourth aspect, or an apparatus, for example, a chip, included in the second device.

The communication apparatus includes corresponding modules, units, or means (means) for implementing the foregoing methods. The modules, units, or means may be implemented by hardware, implemented by software, or implemented by hardware executing corresponding software. The hardware or software includes one or more modules or units corresponding to the foregoing functions.

In some possible designs, the communication apparatus may include a processing module and a communication module. The communication module may include an output module (or a sending module) and an input module (or a receiving module), which are respectively configured to implement output (or sending) functions and input (or receiving) functions in any one of the foregoing aspects and any possible design of the foregoing aspects. The processing module may be configured to implement a processing function in any one of the foregoing aspects and any possible design of the foregoing aspects.

Optionally, the communication apparatus further includes a storage module, configured to store program instructions and data.

According to a sixth aspect, a communication apparatus is provided, including at least one processor, where the processor is configured to run a computer program or an instruction, or is configured to perform the method according to any one of the foregoing aspects by using a logic circuit, so that the communication apparatus performs the method according to any one of the foregoing aspects. The communication apparatus may be the positioning management device in the first aspect or the third aspect, or an apparatus, for example, a chip, included in the positioning management device; or the communication apparatus may be the first device in the second aspect, or an apparatus, for example, a chip, included in the first device; or the communication apparatus may be the second device in the fourth aspect, or an apparatus, for example, a chip, included in the second device.

In some possible designs, the communication apparatus further includes a memory configured to store computer instructions and/or a configuration file of a logic circuit. Optionally, the memory and the processor are integrated together, or the memory is independent of the processor.

In a possible design, the communication apparatus further includes a communication interface configured to input and/or output signals.

In some possible designs, the communication interface is an interface circuit configured to read and write computer instructions. For example, the interface circuit is configured to receive computer-executable instructions (which may be stored in a memory and read directly from the memory, or may pass through other devices) and transmit them to the processor.

In some possible designs, the communication interface is configured to communicate with a module outside the communication apparatus.

In some possible designs, the communication apparatus may be a chip system. When the communication apparatus is a chip system, the chip system may include a chip, or may include a chip and other discrete components.

According to a seventh aspect, a communications apparatus is provided, including a logic circuit and an interface circuit, where the interface circuit is configured to input information and/or output information; and the logic circuit is configured to perform the method according to any one of the foregoing aspects, and perform processing and/or generate output information based on the input information. The communications apparatus may be the positioning management device in the first aspect or the third aspect, or an apparatus, for example, a chip, included in the positioning management device. Alternatively, the communications apparatus may be the first device in the second aspect, or an apparatus, for example, a chip, included in the first device. Alternatively, the communications apparatus may be the second device in the fourth aspect, or an apparatus, for example, a chip, included in the second device.

According to an eighth aspect, a computer-readable storage medium is provided. The computer-readable storage medium stores a computer program or an instruction. When the computer program or the instruction is executed by a processor, the method according to any one of the foregoing aspects is performed.

According to a ninth aspect, a computer program product is provided. When the computer program product is executed by a processor, the method according to any one of the foregoing aspects is performed.

It may be understood that when the communication apparatus provided in any one of the fifth aspect to the seventh aspect is a chip, the foregoing sending action/function may be understood as outputting information, and the foregoing receiving action/function may be understood as inputting information.

For technical effects brought by any design manner in the fifth aspect to the seventh aspect, refer to technical effects brought by different design manners in the first aspect to the fourth aspect. Details are not described herein again.

According to a tenth aspect, a communications system is provided, where the communications system includes a positioning management device, a first device, and a second device.

Optionally, the communications system further includes a third device.

In a possible communications system, a first device is configured to receive second phase information from a second device and send first phase differential information to a positioning management device, where the second phase information is obtained by the second device by measuring second reference signals sent by a terminal device at different moments, the first phase differential information includes information obtained by the first device through differential calculation on the first phase information and the second phase information, and the first phase differential information is obtained by the first device by measuring first reference signals sent by the terminal device at different moments; the second device is configured to determine the second phase information and send the second phase information to the first device and the third device; the third device is configured to receive the second phase information from the second device and send second phase differential information to the positioning management device, where the second phase differential information includes information obtained by the third device through differential calculation on the second phase information and third phase information, and the third phase information is obtained by the third device by measuring third reference signals sent by the terminal device at different moments; and the positioning management device is configured to receive the first phase differential information from the first device and the second phase differential information from the third device, and determine a location of the terminal device based on the first phase differential information and the second phase differential information.

In another possible communications system, the first device is configured to send first phase information to a positioning management device, where the first phase information is obtained by the first device by measuring first reference signals sent by the terminal device at different moments; the second device is configured to send second phase information to the positioning management device, where the second phase information is obtained by the second device by measuring second reference signals sent by the terminal device at different moments; the third device is configured to send third phase information to the positioning management device, where the third phase information is obtained by the third device by measuring third reference signals sent by the terminal device at different moments; the positioning management device is configured to receive the first phase information from the first device, the second phase information from the second device, and the third phase information from the third device, and perform a differential calculation on the first phase information, the second phase information, and the third phase information to determine first phase differential information and second phase differential information; and the positioning management device is further configured to determine a location of the terminal device based on the first phase differential information and the second phase differential information.

### BRIEF DESCRIPTION OF DRAWINGS

FIG. 1 is a schematic flowchart of a UL-based positioning procedure;
FIG. 2 is a schematic diagram of triangulation positioning based on TDOA;
FIG. 3 is a schematic diagram of carrier phase positioning;
FIG. 4 is a schematic diagram of a communication system according to an embodiment of this application;
FIG. 5 is a schematic diagram illustrating an example of the relationships between devices or network elements when the communication method provided in the embodiments of this application is applied in an NR system;
FIG. 6 is a schematic structural diagram of a communication apparatus 600 according to an embodiment of this application;
FIG. 7 is a schematic flowchart illustrating an example of a communication method according to an embodiment of this application;
FIG. 8 is a schematic diagram illustrating an example of interaction between a first device, a second device, and a third device;
FIG. 9 is a schematic diagram illustrating another example of interaction between a first device, a second device, and a third device;
FIG. 10 is a schematic diagram of yet another example of interaction between a first device, a second device, and a third device;
FIG. 11 is a schematic flowchart of another example of a communication method according to an embodiment of this application;
FIG. 12 is a schematic flowchart of yet another example of a communication method according to an embodiment of this application;
FIG. 13 is a schematic diagram of a communication apparatus according to an embodiment of this application;

### DESCRIPTION OF EMBODIMENTS

In the descriptions of this application, unless otherwise specified, "/" indicates an "or" relationship between associated objects. For example, A/B may indicate A or B. The term "and/or" in this application is merely used to describe an association relationship between associated objects, and indicates that three relationships may exist. For example, A and/or B may indicate the following three cases: Only A exists, both A and B exist, and only B exists, where A and B may be singular or plural.

In the descriptions of this application, unless otherwise specified, "a plurality of" means two or more. "At least one of the following items (pieces) or a similar expression thereof" means any combination of these items, including any combination of a single item (piece) or a plurality of items (pieces). For example, "at least one of a, b, and/or c" may indicate: a, b, c, a-b, a-c, b-c, or a-b-c, where a, b, and c may be one or more.

In addition, to clearly describe the technical solutions in the embodiments of this application, terms such as "first" and "second" are used in the embodiments of this application to distinguish between identical or similar items that have basically the same functions or purposes. A person skilled in the art may understand that the terms such as "first" and "second" do not limit a quantity or an execution sequence, and the terms such as "first" and "second" do not necessarily indicate any difference.

In the embodiments of this application, the terms such as "example" or "for example" are used to indicate an example, an illustration, or a description. Any embodiment or design described as "example" or "for example" in the embodiments of this application should not be construed as being more preferred or having more advantages than another embodiment or design. On the contrary, the terms such as "example" or "for example" are used to present related concepts in a specific manner for ease of understanding.

It may be understood that the term "embodiment" mentioned throughout this specification means that particular features, structures, or characteristics associated with the embodiment are included in at least one embodiment of this application. Therefore, embodiments described in various places in this specification may not necessarily refer to the same embodiment. In addition, these particular features, structures, or characteristics may be combined in one or more embodiments in any suitable manner. It may be understood that the embodiments of this application do not necessarily mean that the sequence numbers of the processes indicate an order of execution, and the execution order of the processes should be determined according to their functions and internal logic, without limiting the implementation process of the embodiments of this application in any way.

It may be understood that, in this application, "when" and "if" each mean that a corresponding processing is performed under an objective condition, and do not limit time, nor require a determining action to be performed during implementation, nor imply any other limitation.

It may be understood that some optional features in embodiments of this application may be independently implemented in some scenarios without depending on another feature (for example, a solution on which the optional features are currently based), thereby resolving a corresponding technical problem and achieving a corresponding effect. Alternatively, in some scenarios, these optional features may be combined with another feature based on a requirement. Correspondingly, the apparatus provided in embodiments of this application may also implement these features or functions accordingly. Details are not described herein again.

In this application, unless otherwise specified, for parts that are the same or similar in embodiments, refer to each other. In embodiments of this application, unless otherwise specified or there is a logical conflict, terms and/or descriptions in different embodiments are consistent and may be mutually referenced, and technical features in different embodiments may be combined based on an internal logical relationship thereof, to form a new embodiment. The implementations of this application described below do not constitute a limitation on the protection scope of this application.

To facilitate an understanding of the technical solutions provided in the embodiments of this application, a brief introduction to the related technologies of this application is first provided.

### I. Uplink (UL) based positioning technology.

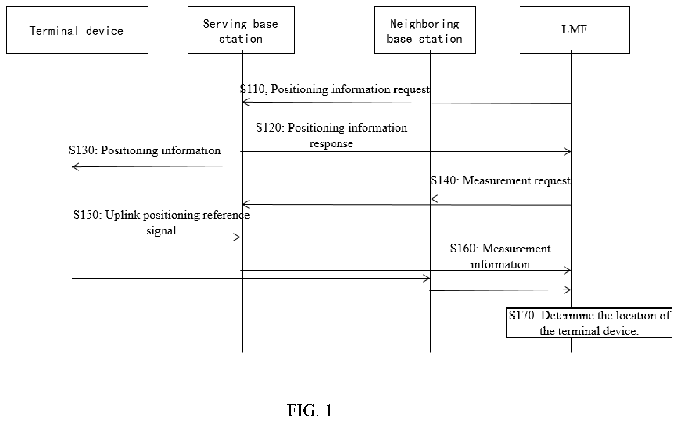

FIG. 1 is a schematic flowchart of uplink positioning. As shown in FIG. 1, the process includes:
S110: The location management function (LMF) network element sends a positioning information request to the serving base station. Correspondingly, the serving base station receives the positioning information request from the LMF.

The positioning information request is used to request positioning information, where the positioning information is, for example, configuration information of an uplink positioning reference signal. For example, the configuration information of the uplink positioning reference signal includes parameters related to the reception of the uplink positioning reference signal by the serving base station and the neighboring base station, such as the time domain resource and/or the frequency domain resource for the serving base station and the neighboring base station to receive the uplink positioning reference signal. For example, the uplink positioning reference signal may be a sounding reference signal (SRS), or another reference signal, which is not limited in this application.

S120: The serving base station sends a positioning information response to the LMF. Correspondingly, the LMF receives the positioning information response from the serving base station.

Here, the positioning information response includes the positioning information.

S130: The serving base station sends positioning information to the terminal device. Correspondingly, the terminal device receives the positioning information from the serving base station.

It should be noted that there is no sequential order between S120 and S130.

S140: The LMF sends a measurement request to the serving base station and the neighboring base station. Correspondingly, the serving base station and the neighboring base station receive the measurement request from the LMF.

The measurement request is used to request the serving base station and the neighboring base station to measure the uplink positioning reference signal separately.

S150: The terminal device sends uplink positioning reference signals to the serving base station and the neighboring base station respectively. Correspondingly, the serving base station and the neighboring base station each receive the uplink positioning reference signal from the terminal device.

In the embodiments of this application, after receiving the positioning information, the terminal device may trigger the sending of uplink positioning reference signals to the serving base station and the neighboring base station respectively.

S160: The serving base station and the neighboring base station send measurement information to the LMF. Correspondingly, the LMF receives the measurement information from the serving base station and the neighboring base station.

Here, the measurement information sent by the serving base station to the LMF is obtained by the serving base station through measuring the uplink positioning reference signal sent by the terminal device to the serving base station, and the measurement information sent by the neighboring base station to the LMF is obtained by the neighboring base station through measuring the uplink positioning reference signal sent by the terminal device to the neighboring base station.

S170: The LMF determines the location of the terminal device based on the measurement information sent by the serving base station and the neighboring base station.

### 2. Positioning technology based on the time difference of arrival (TDOA) at the uplink.

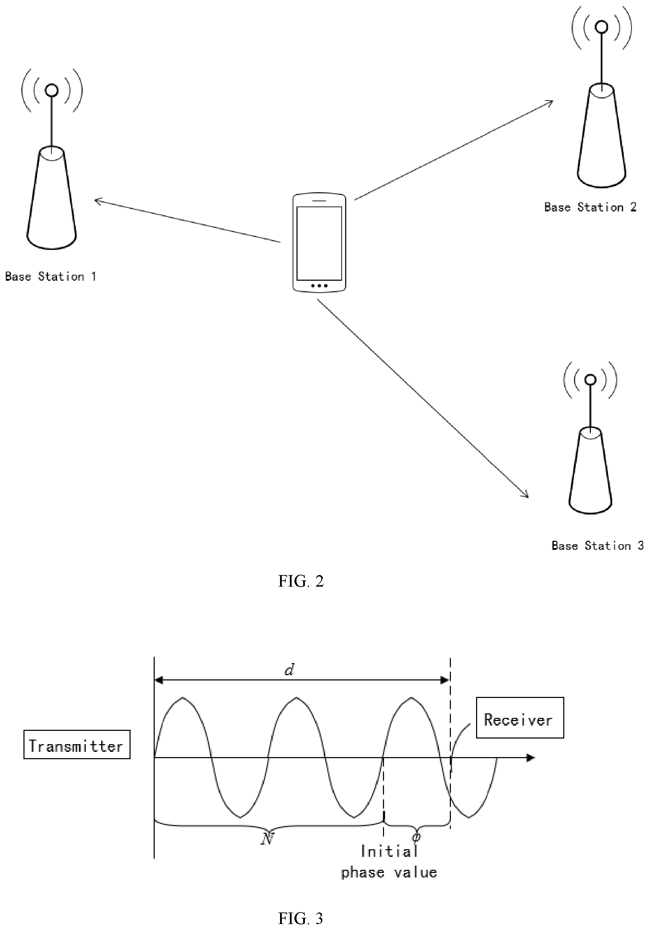

Based on the positioning process described in the related technology 1 above, the following will specifically describe the calculation process for determining the location of a terminal device based on the TDOA in the measurement information. Figure 2 is a schematic diagram of trilateration positioning based on TDOA. As shown in Figure 2, the calculation of the terminal device's location based on the TDOA of uplink positioning reference signals from three base stations is used as an example. Assuming the locations of the three base stations are known, the coordinates of base station 1 are ( ), the coordinates of base station 2 are ( ), the coordinates of base station 3 are ( ), and the coordinates of the target to be located (i.e., the terminal device) are ( ). Here, base station 1 serves as the reference base station, and the location of the terminal device can be determined using formula (1) and formula (2). Formula (1) and formula (2) are as follows:*x*₁, *y*₁(*x*₂, *y*₂) (*x*₃, *y*₃)(*x_{UE}*, *y_{UE}*) $\sqrt{{\left({x}_{1}-{x}_{UE}\right)}^{2} + {\left({y}_{1}-{y}_{UE}\right)}^{2}} - \sqrt{{\left({x}_{2}-{x}_{UE}\right)}^{2} + {\left({y}_{2}-{y}_{UE}\right)}^{2}} = c ∗ Δ {t}_{21}$ $\sqrt{{\left({x}_{1}-{x}_{UE}\right)}^{2} + {\left({y}_{1}-{y}_{UE}\right)}^{2}} - \sqrt{{\left({x}_{3}-{x}_{UE}\right)}^{2} + {\left({y}_{3}-{y}_{UE}\right)}^{2}} = c ∗ Δ {t}_{31}$

Where, represents the time difference between the arrival of the uplink positioning reference signal at base station 1 and at base station 2, represents the time difference between the arrival of the uplink positioning reference signal at base station 1 and at base station 3, represents the speed of light. By solving equations (1) and (2) simultaneously, the Δ*t*₂₁Δ*t*₃₁*c*(*x_{UE}*, *y_{UE}*)can be obtained, which is the position of the target (terminal device) to be located.

It should be noted that, in practical applications, due to the presence of measurement errors, the above equations (1) and (2) generally do not have a closed-form solution. Therefore, the optimal solution to these equations can be obtained by using classical optimization algorithms such as the least squares algorithm or the particle filter algorithm. This application does not impose any limitations on this.

### III. Carrier phase-based positioning technology.

FIG. 3 is a schematic diagram of carrier phase positioning. As shown in FIG. 3, the carrier phase positioning technology measures the distance with integer ambiguity by measuring the carrier phase change of a reference signal from the transmitting end to the receiving end. Herein, the integer ambiguity is the number of complete cycles of the reference signal during spatial transmission. Specifically, the integer ambiguity is an unknown integer corresponding to the first observation value of the phase difference between the carrier phase value and the initial phase value. It can be understood that the integer ambiguity may be solved by using various mathematical methods, for example, the least square ambiguity decorrelation adjustment (LAMBDA), a fast ambiguity algorithm, an integer ambiguity function method, a classical undetermined coefficient method, or a Doppler method (which may also be referred to as a triple difference method), and this is not specifically limited in this embodiment of this application.

For example, the reference signal is an RF signal with a frequency of 3 GHz, and the corresponding carrier wavelength is 0.1 m. Therefore, once the carrier phase integer ambiguity can be correctly resolved, the theoretical accuracy of the carrier phase positioning technology can reach the centimeter or millimeter level, thereby achieving high-precision positioning results.

The distance between the transmitter and the receiver can be determined using the carrier phase positioning technology as shown in Formula (3): $d = λ \left(N+\frac{φ}{2 π}\right)$ where *d* represents the distance between the transmitter and the receiver, φ denotes the carrier phase measurement, N represents the integer ambiguity and is an integer, and λ represents the carrier wavelength.

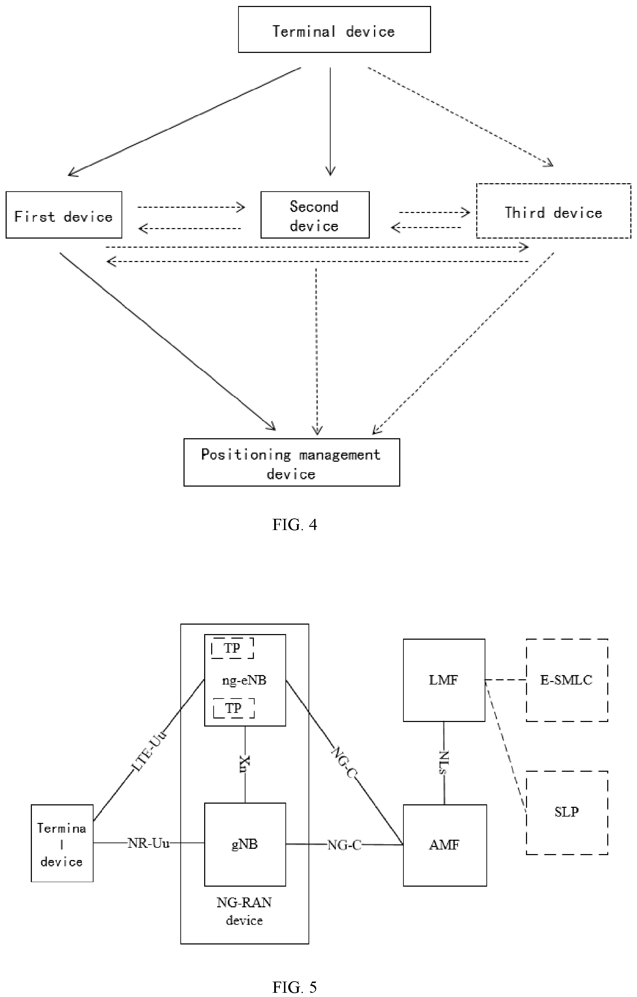

FIG. 4 is a schematic diagram of a communication system according to an embodiment of this application. As shown in FIG. 4, the communication system includes a positioning management device, a first device, a second device, and at least one terminal device. Optionally, the communication system further includes a third device. FIG. 4 illustrates an example in which the communication system includes one terminal device. In a possible implementation, the first device, the second device, and the third device in the communication system may be communication nodes (for example, transmission and reception points (TRP)), which are managed by a network device. In another possible implementation, the first device, the second device, and the third device in the communication system may be network devices.

The positioning management device is configured to determine a location of the terminal device based on the phase differential information, and optionally, is further configured to perform differential calculation based on the phase information to obtain the phase differential information.

The first device, the second device, and the third device are configured to measure a reference signal sent by the terminal device to obtain phase information, and optionally, are further configured to perform differential calculation on the phase information to obtain the phase differential information.

The terminal device is configured to send a reference signal.

The technical solutions in the embodiments of this application may be applied to a 5th generation mobile communication (5th generation, 5G) system or a new radio (new radio, NR) system. The technical solutions in the embodiments of this application may also be applied to other communication systems, for example, an LTE system, an LTE frequency division duplex (frequency division duplex, FDD) system, an LTE time division duplex (time division duplex, TDD) system, a universal mobile telecommunication system (universal mobile telecommunication system, UMTS), and a worldwide interoperability for microwave access (worldwide interoperability for microwave access, WiMAX) communication system. The 5G system in this application includes a non-standalone (non-standalone, NSA) NR system or a standalone (standalone, SA) NR system. The technical solutions provided in this application may also be applied to future communication systems, such as a sixth generation mobile communication system. The communication system may also be a land public mobile network (public land mobile network, PLMN) network, a D2D communication system, a machine to machine (machine to machine, M2M) communication system, an Internet of Things (Internet of Things, IoT) communication system, or another communication system.

Optionally, the terminal device in this application may be user equipment (user equipment, UE), an access terminal, a terminal unit, a user station, a terminal station, a mobile station, a mobile console, a remote station, a remote terminal, a user terminal (terminal equipment, TE), a mobile device, a wireless communication device, a terminal agent, a tablet computer (pad), a handheld device having a wireless communication function, a computing device, or another processing device connected to a wireless modem, a vehicle-mounted device, a vehicle-mounted transceiver unit, or a wearable device in a 5G network or a public land mobile network (public land mobile network, PLMN) evolved after 5G. The access terminal may be a cellular phone, a cordless phone, a session initiation protocol (session initiation protocol, SIP) phone, a wireless local loop (wireless local loop, WLL) station, a personal digital assistant (PDA), a handheld device having a wireless communication function, a computing device, or another processing device connected to a wireless modem, a vehicle-mounted device, an unmanned aerial vehicle (UAV), a robot, an intelligent point of sale (point of sale, POS) device, a customer-premises equipment (customer-premises equipment, CPE) or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal with a communication function in the Internet of Things (internet of things, IoT), for example, a terminal (for example, an internet of vehicles device) in vehicle to everything (vehicle to X, V2X) communication, a terminal in device to device (device to device, D2D) communication, or a terminal in machine to machine (machine to machine, M2M) communication. The terminal may be mobile or fixed.

Optionally, the network device in this application may be an evolved NodeB (NodeB or eNB or e-NodeB, evolved NodeB) in a long term evolution (long term evolution, LTE) system or an enhanced LTE (LTE-advanced, LTE-A) system, for example, a conventional macro base station eNB or a micro base station eNB in a heterogeneous network scenario. Alternatively, the network device may include a next generation NodeB (next generation node B, gNB) in a new radio (new radio, NR) system. Alternatively, the network device may include a transmission reception point (transmission reception point, TRP), a home evolved NodeB (home evolved NodeB, or home NodeB, HNB), a baseband unit (base band unit, BBU), a baseband unit pool (BBU pool), a wireless fidelity (wireless fidelity, WiFi) access point (access point, AP), or the like. Alternatively, the network device may include a base station in a non-terrestrial network (non-terrestrial network, NTN), that is, may be deployed on a flying platform or a satellite. In the NTN, the network device or access device may function as a layer 1 (L1) relay (relay), or may function as a base station, or may function as an integrated access and backhaul (integrated access and backhual, IAB) node. Alternatively, the first network device may be a device that implements a base station function in an IoT, for example, a device that implements a base station function in drone communication, V2X, D2D, or machine to machine (machine to machine, M2M) communication.

In some possible scenarios, the network device may alternatively be a module or unit capable of implementing some functions of a base station. For example, the first network device may be a central unit (central unit, CU), a distributed unit (distributed unit, DU), a CU-control plane (control plane, CP), a CU-user plane (user plane, UP), a radio unit (radio unit, RU), or the like. The CU and DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or CU-CP and CU-UP), DU, or RU may also have different names, but a person skilled in the art can understand their meanings. For example, the first network device may be a network device or a module of a network device in an open radio access network (open RAN, ORAN) system. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the units of the CU (or CU-CP, CU-UP), DU, and RU in this application may be implemented by using a software module, a hardware module, or a combination of a software module and a hardware module.

Optionally, the base station in the embodiments of this application may include base stations in various forms, for example, a macro base station, a micro base station (also referred to as a small cell), a relay station, an access point, a home base station, a TRP, a transmitting point (transmitting point, TP), a mobile switching center, or the like. This is not specifically limited in the embodiments of this application.

Optionally, the positioning management device in the embodiments of this application may be an LMF network element, a location manager unit (location manager unit, LMU), a location management component (location management component, LMC), an LMC integrated into a RAN side, a local location management function (local location management function, LLMF) network element located in an NG-RAN device, an enhanced serving mobile location center (enhanced serving mobile location center, E-SMLC), a secure user plane location platform (secure user plane location platform, SLP), a positioning server, a navigation server, or the like, or may be a chip (system) or another component that can be provided with a positioning management network element function and that can be disposed in an LMF network element, an E-SMLC, an SLP, a positioning server, or a navigation server.

It is understandable that the aforementioned functions may be network elements within hardware devices, software functions running on dedicated hardware, a combination of hardware and software, or virtualized functions instantiated on a platform (e.g., a cloud platform).

FIG. 5 is a schematic diagram illustrating an example of the relationships between devices or network elements when the communication method provided in the embodiments of this application is applied in an NR system. As shown in FIG. 5, a terminal device is connected to an NG-RAN device via an ng-eNB and a gNB through LTE-Uu and/or NR-Uu interfaces; the NG-RAN device is connected to a 5G core network (5G core, 5GC) through an NG-C interface. The NG-RAN device includes one or more ng-eNBs (FIG. 5 illustrates an example with one ng-eNB); the NG-RAN device may also include one or more gNBs (FIG. 5 illustrates an example with one gNB). The ng-eNB is an LTE base station connected to the 5GC, and the gNB is a 5G base station connected to the 5GC. The 5GC includes an AMF network element and an LMF network element. The AMF network element is configured to implement functions such as access management, and the LMF network element is configured to interact with the terminal device or the NG-RAN device to implement various functions (such as a positioning function). The AMF network element and the LMF network element are connected through an NLs interface.

Furthermore, an interface between the 5GC and the NG RAN device on a control plane is an N2 interface, an interface between the 5GC and the NG-RAN on a user plane is an N3 interface, and an interface between gNBs is an Xn interface.

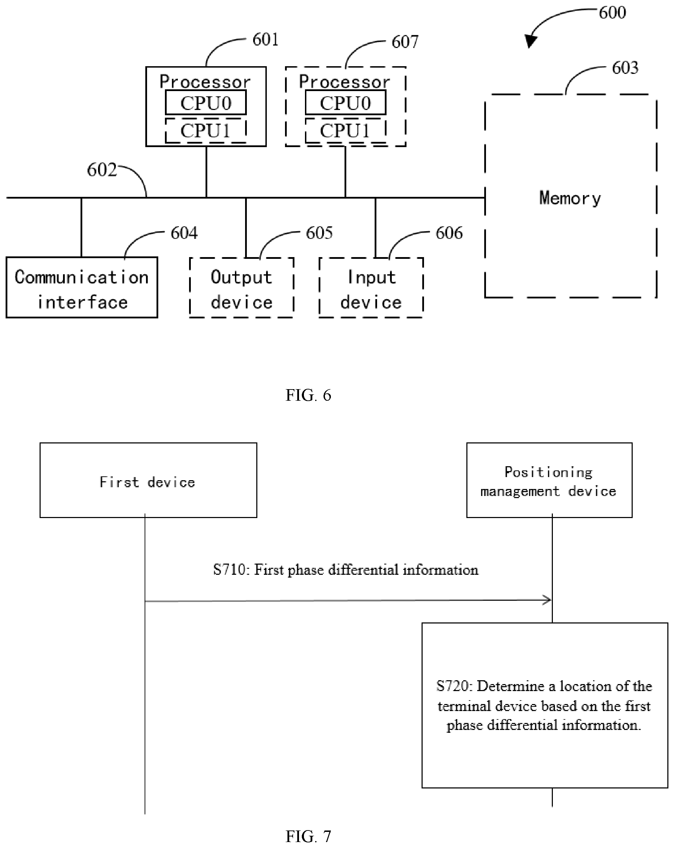

The terminal device, the first device, the second device, the third device, and the positioning management device in this application may implement related functions through the communications apparatus 600 in FIG. 6. FIG. 6 is a schematic structural diagram of a communications apparatus 600 according to an embodiment of this application. The communications apparatus 600 includes one or more processors 601, a communication line 602, and at least one communications interface (FIG. 6 merely shows an example in which the communications apparatus 600 includes a communications interface 604 and one processor 601 for description). Optionally, the communications apparatus 600 may further include a memory 603.

The processor 601 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 602 may include a path for connecting different components.

The communication interface 604 may be a transceiver module used to communicate with another device or a communication network, such as Ethernet, a RAN, a wireless local area network (wireless local area network, WLAN), or the like. For example, the transceiver module may be an apparatus of a transceiver or a transceiver machine. Optionally, the communication interface 604 may also be a transceiver circuit inside the processor 601, configured to implement signal input and signal output of the processor.

The memory 603 may be an apparatus having a storage function. For example, the memory 603 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory may exist independently and be connected to the processor by using the communication line 602. Alternatively, the memory may be integrated with the processor.

The memory 603 is configured to store computer-executable instructions for implementing the solutions of this application, which are controlled and executed by the processor 601. The processor 601 is configured to execute the computer-executable instructions stored in the memory 603, thereby implementing the communication method provided in the embodiments of this application.

Alternatively, optionally, in this embodiment of this application, the processor 601 may perform processing-related functions in the communication method provided in the following embodiments of this application, and the communication interface 604 is responsible for communicating with other devices or communication networks. This is not specifically limited in this embodiment of this application.

Optionally, the computer-executable instructions in the embodiments of this application may also be referred to as application program code. This is not specifically limited in the embodiments of this application.

In a specific implementation, as an embodiment, the processor 601 may include one or more CPUs, for example, CPU 0 and CPU 1 in FIG. 6.

In specific implementation, as an embodiment, the communication apparatus 600 may include a plurality of processors, for example, the processor 607 and the processor 601 in FIG. 6. Each of these processors may be a single-core (single-core) processor, or may be a multi-core (multi-core) processor. The processor herein may include but is not limited to at least one of the following: a central processing unit (central processing unit, CPU), a microprocessor, a digital signal processor (DSP), a microcontroller unit (MCU), an artificial intelligence processor, or other computing devices of various types that run software, where each computing device may include one or more cores configured to execute software instructions to perform operations or processing.

In specific implementation, as an embodiment, the communication apparatus 600 may further include an output device 605 and an input device 606. The output device 605 communicates with the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, a projector (projector), or the like. The input device 606 communicates with the processor 601, and may receive user input in a plurality of manners. For example, the input device 606 may be a mouse, a keyboard, a touchscreen device, a sensing device, or the like.

The communication apparatus 600 may sometimes also be referred to as a communication apparatus, and may be a general-purpose device or a dedicated device. For example, the communication apparatus 600 may be a desktop computer, a portable computer, a network server, a palmtop computer (personal digital assistant, PDA), a mobile phone, a tablet computer, a wireless terminal device, an embedded device, the foregoing terminal, the foregoing network device, or a device having a structure similar to that in FIG. 6. A type of the communication apparatus 600 is not limited in embodiments of this application.

In addition, the composition structure shown in Figure 6 does not constitute a limitation on the communication device. In addition to the components illustrated in Figure 6, the communication device may include more or fewer components than those shown, or some components may be combined, or the components may be arranged in different configurations.

The communication method provided in the embodiments of this application will be described below in conjunction with the communication system shown in Figure 4 or Figure 5.

It should be noted that, in the following embodiments of this application, the names of messages between network elements, the names of parameters, or the names of information items are merely examples, and may be different names in other embodiments. The communication method provided in this application does not specifically limit this.

It can be understood that, in the embodiments of this application, each network element may perform some or all of the steps in the embodiments of this application. These steps or operations are merely examples, and the embodiments of this application may also perform other operations or variations of various operations. In addition, the steps may be performed in different orders than those presented in the embodiments of this application, and it is possible that not all operations in the embodiments of this application need to be performed.

FIG. 7 is a schematic flowchart of an example of a communication method according to an embodiment of this application. The method is described by using interaction between a first device (optionally, a second device or a third device) and a positioning management device as an example. Certainly, an entity performing the actions of the first device, the second device, or the third device in the method may alternatively be an apparatus/module in the first device, the second device, or the third device, for example, a chip, a processor, or a processing unit in the first device, the second device, or the third device; and an entity performing the actions of the positioning management device in the method may alternatively be an apparatus/module in the positioning management device, for example, a chip, a processor, or a processing unit in the positioning management device. This is not specifically limited in this embodiment of this application. A processing performed by a single execution entity in the embodiments of this application may also be divided into being performed by a plurality of execution entities, where these execution entities may be logically and/or physically separated. For example, processing performed by the first device, the second device, or the third device may be divided into being performed by at least one of a CU, a DU, and an RU. As shown in FIG. 7, the method 700 includes the following steps:
S710: The first device sends first phase differential information to the positioning management device. Correspondingly, the positioning management device receives the first phase differential information from the first device.

For example, the first device in this embodiment of this application is, for example, the ng-eNB or the gNB in FIG. 5, and the positioning management device in this embodiment of this application is, for example, the LMF in FIG. 5.

In this embodiment of this application, the first phase differential information includes information obtained by the first device through differential calculation on the first phase information and the second phase information. Optionally, the first phase differential information further includes an identifier of the second device. The first device adds the identifier of the second device to the first phase differential information, so that the positioning management device can learn that the first phase differential information is obtained by the first device through differential calculation on the first phase information of the first device and the second phase information from the second device. Optionally, the measurement request sent by the positioning management device to the first device includes the identifier of the second device, and is used to instruct the first device to perform differential calculation on first phase information obtained by the first device through measuring the first reference signal sent by the terminal device at different moments and second phase information obtained by the second device through measuring the second reference signal sent by the terminal device at different moments. For a measurement request sent by the positioning management device to the first device, refer to the measurement request in S140 in the related technology 1, and details are not described herein again.

In this embodiment of this application, the first phase information is obtained by the first device by measuring the first reference signal sent by the terminal device at different moments. The first phase information may include one or more of the following: a first reference signal carrier phase (reference signal carrier phase, RSCP), a first reference signal carrier phase difference (reference signal carrier phase difference, RSCPD), a first accumulated distance change (accumulated delta range, ADR), a first accumulated phase change, first moment information, and second moment information, where the first moment information and the second moment information are respectively used to indicate different moments at which the terminal device sends the first reference signal, that is, the first moment information indicates a first moment at which the terminal device sends the first reference signal at different moments, and the second moment information indicates a second moment at which the terminal device sends the first reference signal at different moments; or the first moment information and the second moment information are respectively used to indicate different moments at which the first device measures the first reference signal, that is, the first moment information indicates a third moment at which the first device measures the first reference signal at different moments, and the second moment information indicates a fourth moment at which the first device measures the first reference signal at different moments.

It may be understood that there is a link delay between the terminal device and the first device, and therefore there is a delay between a moment at which the terminal device sends the first reference signal and a moment at which the first device measures the first reference signal.

In this embodiment of this application, the first RSCP may include an RSCP obtained when the first device measures the first reference signal sent by the terminal device at the first moment, and/or an RSCP obtained when the first device measures the first reference signal sent by the terminal device at the second moment; the first RSCPD may include a difference between the RSCP obtained when the first device measures the first reference signal sent by the terminal device at the first moment and the RSCP obtained when the first device measures the fourth reference signal sent by the terminal device at the first moment; the first accumulated phase change may include a difference between the RSCP obtained when the first device measures the first reference signal sent by the terminal device at the first moment and the RSCP obtained when the first device measures the first reference signal sent by the terminal device at the second moment; and the first ADR may be obtained by the first device through calculation based on the first accumulated phase change.

It should be noted that the first reference signal and the fourth reference signal are names of reference signals sent by the terminal device to the first device. In this embodiment of this application, time domain resources and/or frequency domain resources occupied by the first reference signal and the fourth reference signal are not limited. The first reference signal and the fourth reference signal sent by the terminal device to the first device at the first moment are signals that occupy different frequency domain resources, and the first reference signal and the fourth reference signal sent by the terminal device to the first device at the first moment and second moments are signals that occupy different time domain resources.

In this embodiment of this application, the second phase information is obtained by the second device by measuring the second reference signals sent by the terminal device at different moments. The second phase information may include one or more of the following: a second RSCP, a second RSCPD, a second ADR, a second accumulated phase change, first moment information, and second moment information, where the first moment information and the second moment information are respectively used to indicate different moments at which the terminal device sends the second reference signal, that is, the first moment information indicates a first moment among different moments at which the terminal device sends the second reference signal, and the second moment information indicates a second moment among different moments at which the terminal device sends the second reference signal; or the first moment information and the second moment information are respectively used to indicate different moments at which the second device measures the second reference signal, that is, the first moment information indicates a third moment among different moments at which the second device measures the second reference signal, and the second moment information indicates a fourth moment among different moments at which the second device measures the second reference signal.

It may be understood that there is a link delay between the terminal device and the second device. Therefore, there is a delay between a moment at which the terminal device sends the second reference signal and a moment at which the second device measures the second reference signal.

In this embodiment of this application, the second RSCP may include an RSCP obtained by the second device by measuring the second reference signal sent by the terminal device at the first moment, and/or an RSCP obtained by the second device by measuring the second reference signal sent by the terminal device at the second moment; the second RSCPD may include a difference between an RSCP obtained by the second device by measuring the second reference signal sent by the terminal device at the second moment and an RSCP obtained by the second device by measuring the fifth reference signal sent by the terminal device at the second moment; the second accumulated phase change may include a difference between an RSCP obtained by the second device by measuring the second reference signal sent by the terminal device at the first moment and an RSCP obtained by the second device by measuring the second reference signal sent by the terminal device at the second moment; and the second ADR may be obtained by the second device through calculation based on the second accumulated phase change.

It should be noted that the second reference signal and the fifth reference signal are names of reference signals sent by the terminal device to the second device. In this embodiment of this application, time domain resources and/or frequency domain resources occupied by the second reference signal and the fifth reference signal are not limited. The second reference signal and the fifth reference signal sent by the terminal device to the second device at the first moment are signals that occupy different frequency domain resources, and the second reference signal sent by the terminal device to the second device at the first moment and the second reference signal sent by the terminal device to the second device at the second moment are signals that occupy different time domain resources.

Optionally, in this embodiment of this application, the first phase differential information includes a difference between the first accumulated phase change and the second accumulated phase change, and/or the first phase differential information includes a difference between the first ADR and the second ADR.

The following will describe the first phase information and the second phase information in the embodiments of this application in detail with reference to specific examples.

For the first phase information:
For example, the phase value obtained by the first device by measuring the first reference signal sent by the terminal device at the first moment may be determined by using formula (4). Formula (4) is as follows: ${φ}_{t}^{\left(1\right)} \left({t}_{1}\right) = \left(-2πf\left({τ}_{t}^{\left(1\right)}\left({t}_{1}\right)+{Δ}_{t}^{\left(1\right)}-{cδ}_{ue}\left({t}_{1}\right)\right)-\left({ϕ}_{t}\left({t}_{1}\right)-{ϕ}^{\left(1\right)}\right)\right) - 2 {πN}_{t}^{\left(1\right)} \left({t}_{1}\right)$ wherein represents the first RSCP obtained by the first device by measuring the first reference signal sent by the terminal device at the first moment, represents a transmission delay between the terminal device and the first device at the first moment, represents a time synchronization error between the terminal device and the first device, represents a clock drift of the terminal device at the first moment, represents a random initial phase error of the terminal device at the first moment, represents a random initial phase error of the first device, and represents a phase integer ambiguity between the terminal device and the first device at the first moment. ${φ}_{t}^{\left(1\right)} \left({t}_{1}\right) {τ}_{t}^{\left(1\right)} \left({t}_{1}\right) {Δ}_{t}^{\left(1\right)} {δ}_{ue} \left({t}_{1}\right) {ϕ}_{t} \left({t}_{1}\right) {ϕ}^{\left(1\right)} {N}_{t}^{\left(1\right)} \left({t}_{1}\right)$

For example, the phase value obtained by the first device by measuring the first reference signal sent by the terminal device at the second moment may be determined by using formula (5). Formula (5) is as follows: ${φ}_{t}^{\left(1\right)} \left({t}_{2}\right) = \left(-2πf\left({τ}_{t}^{\left(1\right)}\left({t}_{2}\right)+{Δ}_{t}^{\left(1\right)}-{cδ}_{ue}\left({t}_{2}\right)\right)-\left({ϕ}_{t}\left({t}_{2}\right)-{ϕ}^{\left(1\right)}\right)\right) - 2 {πN}_{t}^{\left(1\right)} \left({t}_{2}\right)$ wherein represents a phase value obtained by the first device by measuring the first reference signal sent by the terminal device at the second moment, represents a transmission delay between the terminal device and the first device at the second moment, represents a time synchronization error between the terminal device and the first device, represents a clock drift of the terminal device at the second moment, represents a random initial phase error of the terminal device at the second moment, represents a random initial phase error of the first device, and represents a phase integer ambiguity between the terminal device and the first device at the second moment. ${φ}_{t}^{\left(1\right)} \left({t}_{2}\right) {τ}_{t}^{\left(1\right)} \left({t}_{2}\right) {Δ}_{t}^{\left(1\right)} {δ}_{ue} \left({t}_{2}\right) {ϕ}_{t} \left({t}_{2}\right) {ϕ}^{\left(1\right)} {N}_{t}^{\left(1\right)} \left({t}_{2}\right)$

Further, the first accumulated phase change between the first moment and the second moment in terms of time may be determined by using formula (6). Formula (6) is as follows: $\begin{matrix}{Δϕ}_{1} = {φ}_{t}^{\left(1\right)} \left({t}_{2}\right) - {φ}_{t}^{\left(1\right)} \left({t}_{1}\right) = - 2 πf \left({τ}_{t}^{\left(1\right)}\left({t}_{2}\right)-{τ}_{t}^{\left(1\right)}\left({t}_{1}\right)-{cδ}_{ue}\left({t}_{1}\right)+{cδ}_{ue}\left({t}_{2}\right)\right) - {ϕ}_{t} \left({t}_{1}\right) + {ϕ}_{t} \left({t}_{2}\right) - \\ Δ 2 {πN}_{t}^{\left(1\right)} \\ \end{matrix}$ wherein represents the first accumulated phase change obtained by the first device from the first moment to the second moment in time, represents a clock drift deviation value of the terminal device at the first moment and the second moment, represents a random initial phase deviation value of the terminal device at the first moment and the second moment, and represents a difference in phase integer ambiguity between the terminal device and the first device at the second moment and the first moment, which may be determined by detecting several cycles of phase jumps. $Δ {ϕ}_{1} - {cδ}_{ue} \left({t}_{1}\right) + {cδ}_{ue} \left({t}_{2}\right) - {ϕ}_{t} \left({t}_{1}\right) + {ϕ}_{t} \left({t}_{2}\right) Δ 2 {πN}_{t}^{\left(1\right)} = 2 {πN}_{t}^{\left(1\right)} \left({t}_{2}\right) - 2 {πN}_{t}^{\left(1\right)} \left({t}_{1}\right) Δ 2 {πN}_{t}^{\left(1\right)}$

Further, the first ADR from the first device to the terminal device corresponding to the first accumulated phase change from the first moment to the second moment in time may be determined by using formula (7). Formula (7) is as follows: $Δ {d}_{1} = \frac{{Δϕ}_{1}}{2 π} λFormula$ wherein represents the first ADR corresponding to the first accumulated phase change, and represents a wavelength.Δ*d*₁λ

For the second phase information:
For example, the phase value obtained by the second device by measuring the second reference signal sent by the terminal device at the first moment may be determined by using formula (8). Formula (8) is as follows: ${φ}_{t}^{\left(2\right)} \left({t}_{1}\right) = \left(-2πf\left({τ}_{t}^{\left(2\right)}\left({t}_{1}\right)+{Δ}_{t}^{\left(2\right)}-{cδ}_{ue}\left({t}_{1}\right)\right)-\left({ϕ}_{t}\left({t}_{1}\right)-{ϕ}^{\left(2\right)}\right)\right) - 2 {πN}_{t}^{\left(2\right)} \left({t}_{1}\right)$

Herein, represents the second RSCP obtained by the second device by measuring the second reference signal sent by the terminal device at the first moment, represents a transmission delay between the terminal device and the second device at the first moment, represents a time synchronization error between the terminal device and the first device, represents a clock drift of the terminal device at the first moment, represents a random initial phase error of the terminal device at the first moment, represents a random initial phase error of the second device, and represents a phase integer ambiguity between the terminal device and the second device at the first moment. ${φ}_{t}^{\left(2\right)} \left({t}_{1}\right) {τ}_{t}^{\left(2\right)} \left({t}_{1}\right) {Δ}_{t}^{\left(2\right)} {δ}_{ue} \left({t}_{1}\right) {ϕ}_{t} \left({t}_{1}\right) {ϕ}^{\left(2\right)} {N}_{t}^{\left(2\right)} \left({t}_{1}\right)$

For example, the phase value obtained by the second device by measuring the second reference signal sent by the terminal device at the second moment may be determined by using formula (9). Formula (9) is as follows: ${φ}_{t}^{\left(2\right)} \left({t}_{2}\right) = \left(-2πf\left({τ}_{t}^{\left(2\right)}\left({t}_{2}\right)+{Δ}_{t}^{\left(2\right)}-{cδ}_{ue}\left({t}_{2}\right)\right)-\left({ϕ}_{t}\left({t}_{2}\right)-{ϕ}^{\left(2\right)}\right)\right) - 2 {πN}_{t}^{\left(2\right)} \left({t}_{2}\right)$

Herein, represents a phase value obtained by the second device by measuring the second reference signal sent by the terminal device at the second moment, represents a transmission delay between the terminal device and the second device at the second moment, represents a time synchronization error between the terminal device and the second device, represents a clock drift of the terminal device at the second moment, represents a random initial phase error of the terminal device at the second moment, represents a random initial phase error of the second device, and represents a phase integer ambiguity between the terminal device and the second device at the second moment. ${φ}_{t}^{\left(2\right)} \left({t}_{2}\right) {τ}_{t}^{\left(2\right)} \left({t}_{2}\right) {Δ}_{t}^{\left(2\right)} {δ}_{ue} \left({t}_{2}\right) {ϕ}_{t} \left({t}_{2}\right) {ϕ}^{\left(2\right)} {N}_{t}^{\left(2\right)} \left({t}_{2}\right)$

Further, the second accumulated phase change over time from the first moment to the second moment may be determined by using formula (10). Formula (10) is as follows: $\begin{matrix}{Δϕ}_{2} = {φ}_{t}^{\left(2\right)} \left({t}_{2}\right) - {φ}_{t}^{\left(2\right)} \left({t}_{1}\right) = - 2 πf \left({τ}_{t}^{\left(2\right)}\left({t}_{2}\right)-{τ}_{t}^{\left(2\right)}\left({t}_{1}\right)-{cδ}_{ue}\left({t}_{1}\right)+{cδ}_{ue}\left({t}_{2}\right)\right) - {ϕ}_{t} \left({t}_{1}\right) + {ϕ}_{t} \left({t}_{2}\right) - \\ Δ 2 {πN}_{t}^{\left(2\right)}\end{matrix}$

Herein, represents the second accumulated phase change obtained by the second device from the first moment to the second moment in terms of time, represents the clock drift deviation value of the terminal device at the first moment and the second moment, represents the random initial phase deviation value of the terminal device at the first moment and the second moment, and represents the difference between the phase integer ambiguity values of the terminal device and the second device at the second moment and the first moment, which may be determined by detecting several cycles of phase jumps. ${Δϕ}_{2} - {cδ}_{ue} \left({t}_{1}\right) + {cδ}_{ue} \left({t}_{2}\right) - {ϕ}_{t} \left({t}_{1}\right) + {ϕ}_{t} \left({t}_{2}\right) Δ 2 {πN}_{t}^{\left(2\right)} = 2 {πN}_{t}^{\left(2\right)} \left({t}_{2}\right) - 2 {πN}_{t}^{\left(2\right)} \left({t}_{1}\right) Δ 2 {πN}_{t}^{\left(2\right)}$

Furthermore, the second accumulated phase change may be used to determine the second ADR through formula (11). Formula (11) is as follows: $Δ {d}_{2} = \frac{{Δϕ}_{2}}{2 π} λ$ wherein represents the second ADR corresponding to the second accumulated phase change, and represents a wavelength.Δ*d*₂λ

With reference to the foregoing descriptions of the first phase information and the second phase information, the first phase differential information obtained by the first device through differential calculation on the first phase information and the second phase information may be determined by using formula (12). Formula (12) is as follows:${Δϕ}_{12} = {Δϕ}_{1} - {Δϕ}_{2}$

Alternatively, the first phase differential information obtained by the first device through differential calculation on the first phase information and the second phase information may be determined by using formula (13). Formula (13) is as follows: $Δ {d}_{12} = \frac{{Δϕ}_{12}}{2 π} λ$

It should be noted that, in this embodiment of this application, it is assumed that the wavelengths of the first reference signal and the second reference signal are equal. If the wavelengths of the first reference signal and the second reference signal are not equal, more information is required to determine the location of the terminal device. This is not specifically limited in this embodiment of this application.λ

Optionally, the signal strengths of the first reference signal and the second reference signal may be the same or different. This is not limited in this embodiment of this application.

S720: The positioning management device determines the location of the terminal device based on the first phase differential information.

In this embodiment of this application, when the locations of the terminal device at the first moment and the second moment change, the positioning management device may track the terminal device based on the first phase differential information; or when the locations of the terminal device at the first moment and the second moment do not change, the positioning management device may determine information such as a clock drift or a random initial phase of the terminal device based on the first phase differential information. This is not limited in this embodiment of this application.

Optionally, in an embodiment of this application, in a possible implementation, the positioning management device needs to determine the location of the terminal device based on at least two different phase difference information. In this embodiment of this application, an example in which the positioning management device needs two different pieces of differential information (that is, three pieces of phase information need to be obtained by measuring the reference signal by three device pairs) is used for description. That the positioning management device determines the location of the terminal device based on the first phase differential information may include: the positioning management device determines the location of the terminal device based on the first phase differential information and the second phase difference information.

In this embodiment of this application, the second phase difference information includes information obtained by performing differential calculation on the third phase information and other phase information.

Optionally, the other phase information is the first phase information. In an implementation, the second phase difference information is obtained by performing differential calculation on the first phase information and the third phase information by the third device, and therefore, the second phase difference information is sent by the third device to the positioning management device. Alternatively, in another implementation, the second phase difference information is obtained by performing differential calculation on the first phase information and the third phase information by the first device, and therefore, the second phase difference information is sent by the first device to the positioning management device.

Optionally, the other phase information is second phase information. In an implementation, the second phase differential information is obtained by performing a differential calculation on the second phase information and the third phase information by the third device, and the second phase differential information is sent by the third device to the positioning management device. Alternatively, in an implementation, the second phase differential information is obtained by performing a differential calculation on the second phase information and the third phase information by the second device, and the second phase differential information is sent by the second device to the positioning management device.

That is, in this embodiment of this application, the second phase differential information may be obtained through a differential calculation performed by the third device on the third phase information of the third device and the other phase information from another device, and then sent to the positioning management device; or may be obtained through a differential calculation performed by another device on the phase information of the another device and the third phase information from the third device, and then sent to the positioning management device. This is not limited in this embodiment of this application.

Optionally, the second phase differential information further includes an identifier of the second device or an identifier of the first device. By adding the identifier of the second device or the identifier of the first device to the second phase differential information, the positioning management device may learn that the second phase differential information is obtained through a differential calculation on the third phase information and the second phase information from the second device, or is obtained through a differential calculation on the third phase information and the first phase information from the first device. In this embodiment of this application, for the third phase information, refer to the related descriptions of the first phase information or the second phase information in S710. Details are not described again in this embodiment of this application.

In this embodiment of this application, the first device, the second device, and the third device determine the first phase differential information and the second phase difference information to be sent to the positioning management device by exchanging phase information between the devices.

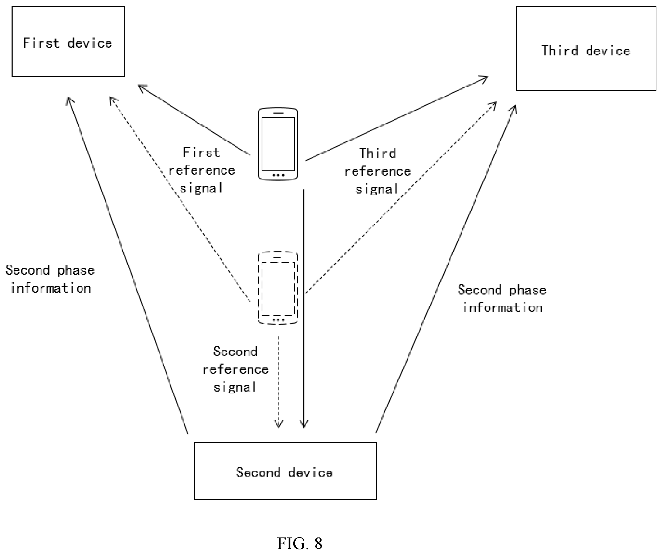

As shown in a possible implementation manner in FIG. 8, the second device functions as a reference device, and the second device sends the second phase information to the first device and the third device. The first device and the third device receive the second phase information from the second device, and the first device and the third device perform differential calculation respectively, while the second device does not need to perform differential calculation. That is, the first device performs differential calculation on the first phase information and the second phase information to obtain the first phase differential information, and the first device sends the first phase differential information to the positioning management device; and the third device performs differential calculation on the third phase information and the second phase information to obtain the second phase difference information, and the third device sends the second phase difference information to the positioning management device.

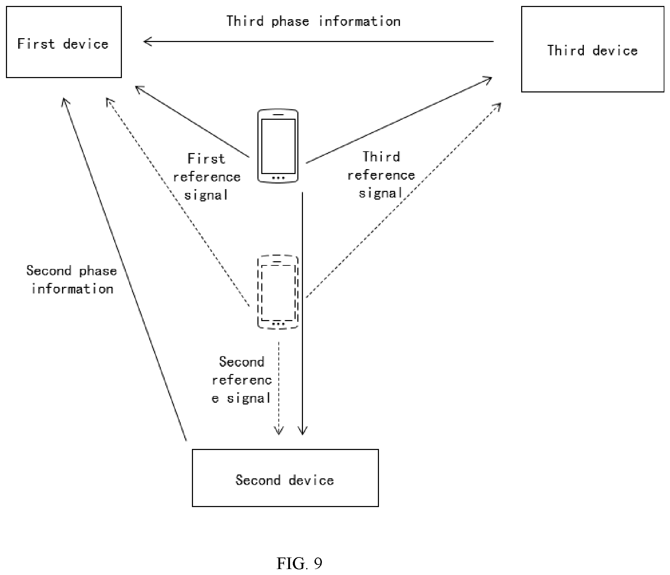

In another possible implementation, as shown in FIG. 9, the first device functions as a reference device, and the first device receives the second phase information from the second device and the third phase information from the third device, where the first device performs differential calculation in a unified manner, and the second device and the third device do not need to perform differential calculation. That is, the first device performs differential calculation on the first phase information and the second phase information to obtain the first phase differential information, the first device performs differential calculation on the first phase information and the third phase information to obtain the second phase difference information, and the first device sends the first phase differential information and the second phase difference information to the positioning management device. Optionally, the first phase differential information includes an identifier of the second device, and the second phase difference information includes an identifier of the third device.

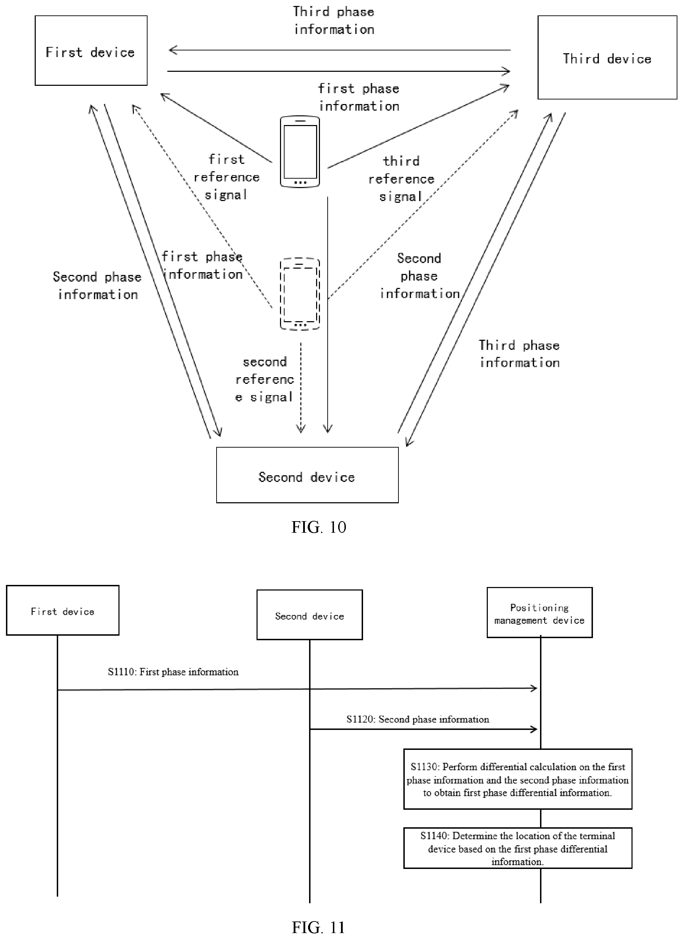

In another possible implementation, as shown in FIG. 10, the first device, the second device, and the third device exchange their respective phase information. Specifically, the first device sends the first phase information to the second device and the third device, the second device sends the second phase information to the first device and the third device, and the third device sends the third phase information to the first device and the second device. The first device, the second device, and the third device each perform a differential calculation. That is, the first device performs a differential calculation on the first phase information and the second phase information, and performs a differential calculation on the first phase information and the third phase information, and then sends the two pieces of phase differential information to the positioning management device; the second device performs a differential calculation on the second phase information and the third phase information, and performs a differential calculation on the second phase information and the first phase information, and then sends the two pieces of phase differential information to the positioning management device; the third device performs a differential calculation on the third phase information and the first phase information, and performs a differential calculation on the third phase information and the second phase information, and then sends the two pieces of phase differential information to the positioning management device. Optionally, one of the pieces of phase differential information sent by the first device to the positioning management device includes an identifier of the second device, and the other piece of phase differential information includes an identifier of the third device; optionally, one of the pieces of phase differential information sent by the second device to the positioning management device includes an identifier of the first device, and the other piece of phase differential information includes an identifier of the third device; or one of the pieces of phase differential information sent by the third device to the positioning management device includes an identifier of the first device, and the other piece of phase differential information includes an identifier of the second device.

It should be noted that FIG. 8, FIG. 9, and FIG. 10 use the first device, the second device, and the third device as examples of devices that participate in obtaining the phase information by measuring the reference signal sent by the terminal device and performing differential calculation on the phase information. There may be more devices that may participate in obtaining the phase information by measuring the reference signal sent by the terminal device and performing differential calculation on the phase information. This is not limited in this embodiment of this application.

It should be noted that FIG. 8, FIG. 9, and FIG. 10 use an example in which the positions of the terminal device change at different moments. A case in which the positions of the terminal device do not change at different moments also falls within the protection scope of this embodiment of this application.

The foregoing several possible manners are several examples in which the first device, the second device, and the third device interact with each other to obtain the corresponding phase difference information. It should be understood that a manner in which another device obtains the corresponding phase difference information through interaction with another device should also fall within the protection scope of this embodiment of this application.

According to the communication method provided in this embodiment of this application, the first device sends the first phase differential information to the positioning management device, so that the positioning management device may determine the location of the terminal device based on the first phase differential information. Because the first phase differential information sent by the first device to the positioning management device is information obtained after the first device performs differential calculation to eliminate the impact of a random initial phase and/or clock drift, a location of the terminal device determined by the positioning management device can be more accurate, thereby improving positioning accuracy.

FIG. 11 is a schematic flowchart of another example of a communication method according to an embodiment of this application. The method is described by using an example of interaction between a first device, a second device (optionally, a third device), and a positioning management device. Certainly, an entity that performs the actions of the first device, the second device, or the third device in the method may alternatively be an apparatus/module in the first device, the second device, or the third device, for example, a chip, a processor, or a processing unit in the first device, the second device, or the third device; or an entity that performs the actions of the positioning management device in the method may alternatively be an apparatus/module in the positioning management device, for example, a chip, a processor, or a processing unit in the positioning management device. This is not specifically limited in this embodiment of this application. The processing performed by a single execution entity in the embodiments of this application may also be divided into processing performed by a plurality of execution entities, where these execution entities may be logically and/or physically separated. For example, the processing performed by the first device, the second device, or the third device may be divided into processing performed by at least one of a CU, a DU, and an RU. As shown in FIG. 11, the method 1100 includes:
S1110: The first device sends first phase information to the positioning management device. Correspondingly, the positioning management device receives the first phase information from the first device.

In this embodiment of this application, for related descriptions of the first phase information, refer to related descriptions in S710. Details are not described herein again.

S1120: The second device sends second phase information to the positioning management device. Correspondingly, the positioning management device receives the second phase information from the second device.

In this embodiment of this application, for related descriptions of the second phase information, refer to related descriptions in S710. Details are not described herein again.

S1130: The positioning management device performs differential calculation on the first phase information and the second phase information to obtain first phase differential information.

For related descriptions of the first phase differential information in the embodiments of this application, refer to related descriptions in S710. Details are not described herein again.

S1140: The positioning management device determines the location of the terminal device based on the first phase differential information.

For descriptions of the positioning management device determining the location of the terminal device based on the first phase differential information in the embodiments of this application, refer to related descriptions in S720. Details are not described herein again.

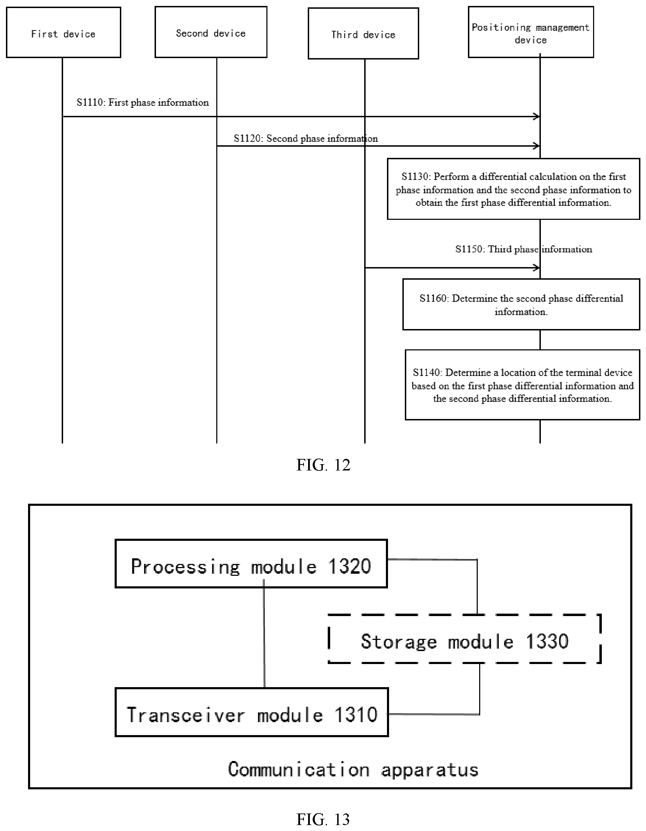

In a possible implementation of this embodiment of this application, the positioning management device needs to determine the location of the terminal device based on at least two different phase difference information. In this embodiment of this application, an example in which the positioning management device needs two different pieces of phase difference information (that is, three pieces of phase information need to be obtained through measurement of the reference signal by three device pairs) is used for description. As shown in FIG. 12, the method further includes the following steps:
S1150: The third device sends third phase information to the positioning management device. Correspondingly, the positioning management device receives the third phase information from the third device.

In this embodiment of this application, the third phase information is obtained by the third device by measuring the third reference signal sent by the terminal device at different moments. For the third phase information, refer to the related description of S720, and details are not described herein again.

S1160: The positioning management device determines the second phase differential information.

In a possible implementation, the second phase differential information is obtained by performing differential calculation on the first phase information and the third phase information by the positioning management device. In another possible implementation, the second phase differential information is obtained by performing differential calculation on the second phase information and the third phase information by the positioning management device. This is not limited in this embodiment of this application.

Alternatively, in a possible implementation, the positioning management device may perform differential calculation on any two pieces of phase information in the first phase information, the second phase information, and the third phase information, to obtain at least two pieces of phase differential information. This is not limited in this embodiment of this application.

In this solution, step S1140 in FIG. 11 may be replaced with: The positioning management device determines the location of the terminal device based on the first phase differential information and the second phase differential information.

According to the communication method provided in this embodiment of this application, the first device and the second device send the first phase information and the second phase information to the positioning management device, so that the positioning management device may perform differential calculation based on the first phase information and the second phase information to obtain the first phase differential information, and determine a location of the terminal device based on the first phase differential information. Because the first phase differential information is information obtained through differential calculation performed by the positioning management device, which eliminates the impact of a random initial phase and/or clock drift, the location of the terminal device determined by the positioning management device can be more accurate, thereby improving positioning accuracy.

The foregoing mainly describes the solutions provided in embodiments of this application from the perspective of interaction between the first device (optionally, the second device or the third device, and for functions of the first device, refer to the first device, and details are not described again in the following embodiments) and the positioning management device. Correspondingly, an embodiment of this application further provides a communications apparatus, where the communications apparatus is configured to implement the foregoing methods. The communications apparatus may be the first device in the foregoing method embodiments, an apparatus that includes the first device, or a component that can be used in the first device; or the communications apparatus may be the positioning management device in the foregoing method embodiments, an apparatus that includes the positioning management device, or a component that can be used in the positioning management device. It may be understood that, to implement the foregoing functions, the communications apparatus includes corresponding hardware structures and/or software modules for performing the functions. A person skilled in the art should easily be aware that, in combination with units and algorithm steps of the examples described with reference to the embodiments disclosed in this specification, this application can be implemented by hardware or a combination of hardware and computer software. Whether a function is performed by hardware or hardware driven by computer software depends on particular applications and design constraints of the technical solutions. A person skilled in the art can use different methods to implement the described functions for each particular application, but it should not be considered that the implementation goes beyond the scope of this application.

In the embodiments of this application, the communication apparatus may be divided into function modules according to the method embodiments. For example, each function module may be obtained through division based on each corresponding function, or two or more functions may be integrated into one processing module. The integrated module may be implemented in a form of hardware, or may be implemented in a form of a software function module. It should be understood that the module division in the embodiments of this application is an example, and is merely logical function division, and may be other division in actual implementation.

For example, FIG. 13 is a schematic diagram of a communication apparatus according to an embodiment of this application, where an example is used in which the communication apparatus is the positioning management device (which may be a chip of the positioning management device, a module of the positioning management device, or an internal apparatus of the positioning management device) in the foregoing method embodiments. The positioning management device includes a transceiver module 1310 and a processing module 1320. The transceiver module 1310 may also be referred to as a transceiver unit, and is configured to implement a transceiver function, for example, may be a transceiver circuit, a transceiver machine, a transceiver, or a communication interface.

In a possible implementation, the transceiver module 1310 receives the first phase differential information.

In this embodiment of this application, the first phase differential information includes information obtained by the first device through differential calculation on the first phase information and the second phase information, where the first phase information is obtained by the first device by measuring the first reference signal sent by the terminal device at different moments, and the second phase information is obtained by the second device by measuring the second reference signal sent by the terminal device at different moments.

The processing module 1320 is configured to determine a location of the terminal device based on the first phase differential information.

Alternatively, in another possible implementation, the transceiver module 1310 is configured to receive the first phase information and the second phase information.

In this embodiment of this application, the first phase information is obtained by the first device by measuring the first reference signal sent by the terminal device at different moments, and the second phase information is obtained by the second device by measuring the second reference signal sent by the terminal device at different moments.

The processing module 1320 is configured to perform differential calculation on the first phase information and the second phase information to obtain first phase differential information;

The processing module is further configured to determine a location of the terminal device based on the first phase differential information.

For example, FIG. 13 is a schematic diagram of a communications apparatus according to an embodiment of this application. An example in which the communications apparatus is the first device (which may be a chip of the first device, a module of the first device, or an internal apparatus of the first device) in the foregoing method embodiments is used. The first device includes a transceiver module 1310 and a processing module 1320. The transceiver module 1310 may also be referred to as a transceiver unit, configured to implement a transceiver function, for example, may be a transceiver circuit, a transceiver machine, a transceiver, or a communication interface.

In this embodiment of this application, the transceiver module 1310 is configured to receive second phase information from a second device.

In this embodiment of this application, the second phase information is obtained by the second device by measuring second reference signals sent by the terminal device at different moments.

The transceiver module is further configured to send the first phase differential information to the positioning management device.

In this embodiment of this application, the first phase differential information includes information obtained by performing a differential calculation on the first phase information and the second phase information by the first device, and the first phase information is information obtained by the first device by measuring the first reference signal sent by the terminal device at different moments.

All related content of the steps in the foregoing method embodiments may be cited into the function descriptions of the corresponding function modules, and details are not described herein again. Optionally, the communication apparatus may further include a storage module 1330. The storage module 1330 may be configured to store an instruction and/or data, and the processing module 1320 may read the instruction and/or the data from the storage module 1330.

In this embodiment of this application, the communication apparatus is presented in a form of dividing each function module through integration. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the communication apparatus may be implemented in a form of the communication apparatus 600 shown in FIG. 6.

For example, the processor 601 in the communication apparatus 600 shown in FIG. 6 may invoke the computer-executable instructions stored in the memory 603, so that the communication apparatus 600 performs the communication method in the foregoing method embodiments.

Specifically, functions/implementation processes of the transceiver module 1310 and the processing module 1320 in FIG. 13 may be implemented by the processor 601 in the communication apparatus 600 shown in FIG. 6 by invoking the computer-executable instructions stored in the memory 603. Alternatively, the function/implementation process of the processing module 1320 in FIG. 13 may be implemented by the processor 601 in the communication apparatus 600 shown in FIG. 6 by invoking the computer-executable instructions stored in the memory 603, and the function/implementation process of the transceiver module 1310 in FIG. 13 may be implemented by the communication interface 604 in the communication apparatus 600 shown in FIG. 6. It should be understood that one or more of the foregoing modules or units may be implemented by software, hardware, or a combination thereof. When any one of the foregoing modules or units is implemented by software, the software exists in a form of computer program instructions and is stored in a memory, and the processor may be configured to execute the program instructions and implement the foregoing method procedures. The processor may be built into an SoC (system on a chip) or an ASIC, or may be an independent semiconductor chip. In addition to an off-core core used for performing operations or processing by executing software instructions, the processor may further include necessary hardware accelerators, such as a field programmable gate array (field programmable gate array, FPGA), a PLD (programmable logic device), or a logic circuit that implements dedicated logic operations.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and may run necessary software or perform the foregoing method procedures without depending on software.

Optionally, an embodiment of this application further provides a communications apparatus (for example, the communications apparatus may be a chip or a chip system). The communications apparatus includes a processor, configured to implement the method in any one of the foregoing method embodiments. In a possible design, the communications apparatus further includes a memory. The memory is configured to store necessary program instructions and data, and the processor may invoke program code stored in the memory to instruct the communications apparatus to perform the method in any one of the foregoing method embodiments. Certainly, the memory may not be disposed in the communications apparatus. When the communications apparatus is a chip system, the chip system may include a chip, or may include a chip and another discrete component. This is not specifically limited in embodiments of this application.

Optionally, an embodiment of this application further provides a computer-readable storage medium, where the computer-readable storage medium stores a computer program or an instruction, and when the computer program or the instruction is run on a communications apparatus, the communications apparatus is enabled to perform the method according to any one of the foregoing method embodiments or implementations thereof.

Optionally, an embodiment of this application further provides a communications system, where the communications system includes the positioning management device and the first device in the foregoing method embodiments, and optionally, the communications system further includes a second device and a third device.

All or a part of the foregoing embodiments may be implemented through software, hardware, firmware, or any combination thereof. When the embodiments are implemented using a software program, all or a part of the embodiments may be implemented in a form of a computer program product. The computer program product includes one or more computer instructions. When the computer program instructions are loaded and executed on a computer, all or a part of the procedures or functions according to the embodiments of this application are generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

Although embodiments of this application are described with reference to the present disclosure, during the implementation of this application as claimed, a person skilled in the art may understand and implement other variations of the disclosed embodiments by viewing the accompanying drawings, disclosed content, and the appended claims. In the claims, the term "comprising" (comprising) does not exclude other components or steps, and the use of the term "a" or "one" does not preclude the presence of more than one. A single processor or other unit may implement several functions enumerated in the claims. Some measures are set forth in dependent claims that are different from each other, but this does not mean that these measures cannot be combined to achieve good effects.

Although this application is described with reference to specific features and embodiments thereof, it is apparent that various modifications and combinations may be made without departing from the spirit and scope of this application. Accordingly, this specification and the accompanying drawings are merely example illustrations of this application as defined by the appended claims, and are considered as encompassing any and all modifications, variations, combinations or equivalents that fall within the scope of this application. It is clear that a person skilled in the art may make various changes and modifications to this application without departing from the spirit and scope of this application. Therefore, the application is intended to cover these modifications and variations of this application provided that these modifications and variations fall within the scope of the claims of this application and their equivalent technologies.

## Claims

1. A communication method, comprising:
receiving first phase differential information, wherein the first phase differential information comprises information obtained by performing a differential calculation on first phase information and second phase information by a first device, the first phase information is obtained by the first device by measuring first reference signals sent by a terminal device at different moments, and the second phase information is obtained by a second device by measuring second reference signals sent by the terminal device at different moments;
determining a location of the terminal device based on the first phase differential information.

2. The method according to claim 1, wherein the first phase differential information further comprises an identifier of the second device.

3. The method according to claim 1 or 2, wherein the first phase information comprises one or more of the following: a first reference signal carrier phase RSCP, a first reference signal carrier phase difference RSCPD, a first accumulated distance/phase change ADR, first moment information, and second moment information, wherein the first moment information and the second moment information are respectively used to indicate different moments at which the terminal device sends the first reference signal or different moments at which the first device measures the first reference signal.

4. The method according to any one of claims 1 to 3, wherein the second phase information comprises one or more of the following: a second reference signal carrier phase RSCP, a second reference signal carrier phase difference RSCPD, a second accumulated distance/phase change ADR, first moment information, and second moment information, wherein the first moment information and the second moment information are respectively used to indicate different moments at which the terminal device sends the second reference signal or different moments at which the second device measures the second reference signal.

5. A communication method, comprising:
receiving first phase information and second phase information, wherein the first phase information is obtained by a first device by measuring first reference signals sent by a terminal device at different moments, and the second phase information is obtained by a second device by measuring second reference signals sent by the terminal device at different moments;
performing differential calculation on the first phase information and the second phase information to obtain first phase differential information;
determining a location of the terminal device based on the first phase differential information.

6. The method according to claim 5, wherein the first phase information comprises one or more of the following: a first reference signal carrier phase RSCP, a first reference signal carrier phase difference RSCPD, a first accumulated distance/phase change ADR, first moment information, and second moment information, wherein the first moment information and the second moment information are respectively used to indicate different moments at which the terminal device sends the first reference signal, or different moments at which the first device measures the first reference signal.

7. The method according to claim 5 or 6, wherein the second phase information comprises one or more of the following: a second reference signal carrier phase RSCP, a second reference signal carrier phase difference RSCPD, a second accumulated distance/phase change ADR, first moment information, and second moment information, wherein the first moment information and the second moment information are respectively used to indicate different moments at which the terminal device sends the second reference signal or different moments at which the second device measures the second reference signal.

8. A communication method, applied to a first device, comprising:
receiving second phase information from a second device, wherein the second phase information is obtained by the second device by measuring second reference signals sent by a terminal device at different moments;
sending first phase differential information to a positioning management device, wherein the first phase differential information comprises information obtained by the first device through differential calculation on first phase information and the second phase information, and the first phase information is obtained by the first device by measuring first reference signals sent by the terminal device at different moments.

9. The method according to claim 8, wherein the first phase differential information further comprises an identifier of the second device.

10. The method according to claim 8 or 9, wherein the first phase information comprises one or more of the following: a first reference signal carrier phase RSCP, a first reference signal carrier phase difference RSCPD, a first accumulated distance/phase change ADR, first moment information, and second moment information, wherein the first moment information and the second moment information are respectively used to indicate different moments at which the terminal device sends the first reference signal or different moments at which the first device measures the first reference signal.

11. The method according to any one of claims 8 to 10, wherein the second phase information comprises one or more of the following: a second reference signal carrier phase RSCP, a second reference signal carrier phase difference RSCPD, a second accumulated distance/phase change ADR, first moment information, and second moment information, wherein the first moment information and the second moment information are respectively used to indicate different moments at which the terminal device sends the second reference signal or different moments at which the second device measures the second reference signal.

12. A communication apparatus, comprising:
a transceiver module, configured to receive first phase differential information, where the first phase differential information includes information obtained by performing a differential calculation on first phase information and second phase information by a first device, the first phase information is obtained by the first device by measuring first reference signals sent by a terminal device at different moments, and the second phase information is obtained by a second device by measuring second reference signals sent by the terminal device at different moments;
a processing module, configured to determine a location of the terminal device based on the first phase differential information.

13. The apparatus according to claim 12, wherein the first phase differential information further comprises an identifier of the second device.

14. The apparatus according to claim 12 or 13, wherein the first phase information comprises one or more of the following: a first reference signal carrier phase RSCP, a first reference signal carrier phase difference RSCPD, a first accumulated distance/phase change ADR, first moment information, and second moment information, wherein the first moment information and the second moment information are respectively used to indicate different moments at which the terminal device sends the first reference signal or different moments at which the first device measures the first reference signal.

15. The apparatus according to any one of claims 12 to 14, wherein the second phase information comprises one or more of the following: a second reference signal carrier phase RSCP, a second reference signal carrier phase difference RSCPD, a second accumulated distance/phase change ADR, first moment information, and second moment information, wherein the first moment information and the second moment information are respectively used to indicate different moments at which the terminal device sends the second reference signal or different moments at which the second device measures the second reference signal.

16. A communication apparatus, comprising:
a transceiver module, configured to receive first phase information and second phase information, wherein the first phase information is obtained by a first device by measuring first reference signals sent by a terminal device at different moments, and the second phase information is obtained by a second device by measuring second reference signals sent by the terminal device at different moments;
a processing module, configured to perform differential calculation on the first phase information and the second phase information to obtain first phase differential information;
the processing module is further configured to determine the location of the terminal device based on the first phase differential information first phase differential information.

17. The apparatus according to claim 16, wherein the first phase information comprises one or more of the following: a first reference signal carrier phase RSCP, a first reference signal carrier phase difference RSCPD, a first accumulated distance/phase change ADR, first moment information, and second moment information, wherein the first moment information and the second moment information are respectively used to indicate different moments at which the terminal device sends the first reference signal or different moments at which the first device measures the first reference signal.

18. The apparatus according to claim 16 or 17, wherein the second phase information comprises one or more of the following: a second reference signal carrier phase RSCP, a second reference signal carrier phase difference RSCPD, a second accumulated distance/phase change ADR, first moment information, and second moment information, wherein the first moment information and the second moment information are respectively used to indicate different moments at which the terminal device sends the second reference signal or different moments at which the second device measures the second reference signal.

19. A communication apparatus, comprising:
a transceiver module, configured to receive second phase information from a second device, wherein the second phase information is obtained by the second device by measuring second reference signals sent by a terminal device at different moments;
the transceiver module is further configured to send first phase differential information to a positioning management device, wherein the first phase differential information comprises information obtained by the first device through differential calculation on first phase information and the second phase information, and the first phase information is obtained by the first device by measuring first reference signals sent by the terminal device at different moments.

20. The apparatus according to claim 19, wherein the first phase differential information further comprises an identifier of the second device.

21. The apparatus according to claim 19 or 20, wherein,
The first phase information comprises one or more of the following: a first reference signal carrier phase RSCP, a first reference signal carrier phase difference RSCPD, a first accumulated distance/phase change ADR, first moment information, and second moment information, wherein the first moment information and the second moment information are respectively used to indicate different moments at which the terminal device sends the first reference signal or different moments at which the communications apparatus measures the first reference signal.

22. The apparatus according to any one of claims 19 to 21, wherein the second phase information comprises one or more of the following: a second reference signal carrier phase RSCP, a second reference signal carrier phase difference RSCPD, a second accumulated distance/phase change ADR, first moment information, and second moment information, wherein the first moment information and the second moment information are respectively used to indicate different moments at which the terminal device sends the second reference signal or different moments at which the second device measures the second reference signal.

23. A communication apparatus, wherein the communication apparatus comprises a module configured to perform the method according to any one of claims 1 to 4, or comprises a module configured to perform the method according to any one of claims 5 to 7, or comprises a module configured to perform the method according to any one of claims 8 to 11.

24. A communication apparatus, comprising a processor, wherein the processor is configured to perform the method according to any one of claims 1 to 4, or cause the communication apparatus to perform the method according to any one of claims 5 to 7, or cause the communication apparatus to perform the method according to any one of claims 8 to 11.

25. A computer-readable storage medium, comprising instructions, wherein when the instructions are run, the method according to any one of claims 1 to 4 is implemented, or the method according to any one of claims 5 to 7 is implemented, or the method according to any one of claims 8 to 11 is implemented.

26. A computer program product, wherein the computer program product comprises instructions, and when the instructions are run, the method according to any one of claims 1 to 4 is implemented, or the method according to any one of claims 5 to 7 is implemented, or the method according to any one of claims 8 to 11 is implemented.

27. A communication system, wherein the communication system comprises the communication apparatus according to any one of claims 12 to 15 and the communication apparatus according to any one of claims 19 to 22.
